# EUROPÄISCHE PATENTANMELDUNG

(11) **EP 4 187 058 A1**
(43) Veröffentlichungstag der Anmeldung: **31.05.2023**
(21) Anmeldenummer: 22203453.0
(22) Anmeldetag: 25.10.2022
(51) Int. Cl.: F01D 5/14, F04D 25/04, F04D 29/32, F04D 29/54, F04D 19/02

(54) **VERDICHTUNGSSYSTEM FÜR EINE GASTURBINE, HOCHDRUCKVERDICHTER, VERDICHTUNGSSYSTEM UMFASSEND EINEN HOCHDRUCKVERDICHTER NIEDERDRUCKVERDICHTER, VERDICHTUNGSSYSTEM UMFASSEND EINEN NIEDERDRUCKVERDICHTER UND GASTURBINE**

(30) Priorität: 25.11.2021 DE 102021130997
(71) Anmelder: MTU Aero Engines AG, 80995 München (DE)
(72) Erfinder: Sahota, Harsimar, 80995 München (DE)

(57) **Zusammenfassung**

Die Erfindung betrifft ein Verdichtungssystem (2) für eine Gasturbine (1), insbesondere für eine Fluggasturbine (1), wobei das Verdichtungssystem (2) einen Strömungskanal (3) umfasst, der sich von einer Eintrittsquerschnittsfläche (5) eines Eintrittsleitgitters (6) eines Niederdruckverdichters (7) des Verdichtungssystems (2) über eine in einer Axialrichtung (a) des Verdichtungssystems (2) bis zu einer Austrittsquerschnittsfläche (8) eines Austrittsleitgitters eines Hochdruckverdichters (10) des Verdichtungssystems (2) verlaufenden Strömungskanallänge (11) erstreckt. Es ist vorgesehen, dass der Strömungskanal (3) entlang der Strömungskanallänge (11) senkrecht zu der Axialrichtung (a) ausgerichtete Querschnittsflächen (17) umfasst, die jeweilige vorbestimmte Größen (18) aufweisen, wobei die Eintrittsquerschnittsfläche (5) eine Größe (18) aufweist, die ein 15,3 bis 16,1 - faches einer Größe (18) der Austrittsquerschnittsfläche (8) beträgt, und/oder eine in einem Abstand von 40 % der Strömungskanallänge (11) zu der Eintrittsquerschnittsfläche (5) angeordnete Querschnittsfläche (17) eine Größe (18) aufweist, die ein 5,0 bis 5,2 -faches der Größe (18) der Austrittsquerschnittsfläche (8) beträgt.

## Beschreibung

Die Arbeiten, die zu dieser Erfindung geführt haben, wurden gemäß der Finanzhilfevereinbarung Nr. 807085 unter dem gemeinsame Unternehmen "Clean Sky 2" (CSJU) im Zuge EU-Rahmenprogramms für Forschung und Innovation Horizont 2020 gefördert.

### Beschreibung

Die Erfindung betrifft ein Verdichtungssystem für eine Gasturbine gemäß den Merkmalen des Oberbegriffs des Anspruchs 1, einen Hochdruckverdichter für ein Verdichtungssystem für eine Gasturbine gemäß den Merkmalen des Oberbegriffs des Anspruchs 5, ein Verdichtungssystem für eine Gasturbine, umfassend einen Hochdruckverdichter gemäß den Merkmalen des Oberbegriffs des Anspruchs 7, einen Niederdruckverdichter für ein Verdichtungssystem für eine Gasturbine gemäß den Merkmalen des Oberbegriffs des Anspruchs 8, ein Verdichtungssystem für eine Gasturbine, umfassend einen Niederdruckverdichter gemäß den Merkmalen des Oberbegriffs des Anspruchs 10, sowie eine Gasturbine, umfassend zumindest ein Verdichtungssystem gemäß den Merkmalen des Oberbegriffs des Anspruchs 11.

Gasturbinen weisen zumindest ein Verdichtungssystem auf, welches dazu vorgesehen ist, durch die Gasturbine angesogene Luft zu verdichten, bevor diese der Brennkammer zugeführt wird. In Flugzeugturbinen umfassen die Verdichtungssysteme Axialverdichter, welche dazu eingerichtet sind, der Luft durch Laufschaufeln, welche um eine Welle des Verdichtungssystems rotieren, zur Verdichtung kinetische Energie zuzuführen. Verdichtungssysteme sind im Allgemeinen mehrstufig aufgebaut, wobei verschiedene Verdichter des Verdichtungssystems in einer Axialrichtung hintereinander angeordnet sind. Die Verdichter umfassen entlang eines axial verlaufenden Hauptströmungspfades der Luft einen Niederdruckverdichter und einen Hochdruckverdichter. Der Niederdruckverdichter, welcher auch als Booster bezeichnet wird, hat die Aufgabe, die Luft anzusaugen und die angesogene Luft vorzuverdichten. Die vorverdichtete Luft wird an einem Austrittsleitgitter des Niederdruckverdichters ausgegeben und durch einen Übergangskanal, welcher in axialer Richtung zwischen dem Niederdruckverdichter und dem Hochdruckverdichter angeordnet ist, dem Hochdruckverdichter zugeführt. Der Hochdruckverdichter verdichtet die Luft weiter, sodass sie der Brennkammer zugeführt werden kann.

Die Luft durchströmt das Verdichtungssystem entlang eines Strömungskanals, welcher durch Kanalwände des Verdichtungssystems in radialer Richtung bezüglich der Welle des Verdichtungssystems begrenzt ist. Für eine hohe Effizienz des Verdichtungssystems ist es erforderlich, den Strömungskanals auf eine optimale Strömungsführung der Luft geometrisch auszulegen.

Aus dem Stand der Technik sind Lösungen bekannt, welche eine Optimierung einer Strömungsführung ermöglichen.

In der DE 10 2016 115 868 A1 ist eine Strömungsarbeitsmaschine mit einem hohen Ausnutzungsgrad offenbart. Die Strömungsarbeitsmaschine weist einen, durch eine Nabe und ein Gehäuse gebildeten Hauptströmungspfad auf. In dem Hauptströmungspfad ist zumindest eine Anordnung rotierender, einem Fluid Energie zuführender Schaufeln vorgesehen, die eine Rotorbaugruppe bildet. Die Strömungsarbeitsmaschine umfasst zumindest eine im Hauptströmungspfad benachbart zum Rotor angeordnete Anordnung ruhender Schaufeln, die eine Statorbaugruppe bildet, wobei jeweils eine Rotorbaugruppe und eine dazu benachbarte Statorbaugruppe eine Stufe der Strömungsarbeitsmaschine bilden. Es ist vorgesehen, dass in mindestens einer Stufe gemittelte Schaufelprofilwinkel der Rotorbaugruppe, die gemittelten Schaufelprofilwinkel der Statorbaugruppe sowie der Verlauf der Querschnittsflächen des Hauptströmungspfads in stromabwärtiger Richtung derart gewählt sind, dass sie einer bestimmten Beziehung genügen.

Die EP 2 275 647 A2 offenbart eine Strömungsarbeitsmaschine mit einer Schaufelreihengruppe. Die Strömungsarbeitsmaschine umfasst einen, mit einem durch eine rotierende Welle und ein Gehäuse gebildeten Hauptströmungspfad, in dem zumindest eine Anordnung rotierender, einen Rotor bildender und dem Fluid Energie zuführender Schaufeln vorgesehen ist und in dem in Hauptströmungsrichtung benachbart zum Rotor eine Anordnung ruhender, einen Stator bildender Schaufeln vorgesehen ist. Es ist vorgesehen, dass ein Flächenquerschnittsverlauf des Hauptströmungspfades in mindestens einer eine Rotoranordnung und eine Statoranordnung umfassende Stufe zu einem überhöhten Rotor-Stator-Einschnürungsverhältnis führt welches einer vorgegebenen Beziehung genügt.

Die DE 10 2004 042 699 A1 offenbart eine Strömungsstruktur für eine Gasturbine. Die Strömungsstruktur für die Gasturbine, insbesondere für ein Flugzeugtriebwerk weist in einem Übergangskanal zwischen zwei Verdichtern oder in einem Übergangskanal zwischen zwei Turbinen oder in einem Übergangskanal eines Turbinenaustrittsgehäuses stromabwärts einer Niederdruckturbine mit in den Übergangskanal positionierten, in Umfangsrichtung des Übergangskanals voneinander beabstandete Stützrippen auf. Es ist vorgesehen, dass eine den Übergangskanal radial nach innen begrenzende Kanalwand und/oder eine den Übergangskanal radial nach außen begrenzende Kanalwand im Bereich der Strömungsaustrittskanten der Stützrippen nach innen in den Übergangskanal hinein eingezogen ist.

In der EP 2 159 398 B1 ist ein ablöseunempfindlicher Strömungseintrittskanal für Turbinenmittelrahmen offenbart. Es ist vorgesehen, dass die Anordnungen einen Kanal, der einen allgemein ringförmigen Strömungsweg definiert, umfasst. Der Kanal umfasst einen vorderen Kanalbereich, der in einer stromabwärtigen Richtung einen größer werdenden Radius des Strömungsweges definiert. Es vorgesehen, dass der Kanal einen stromabwärtigen Kanalbereich umfasst, der sich benachbart zu und hinter dem vorderen Kanalbereich befindet, wobei der stromabwärtige Kanalbereich eine Wölbung definiert, die sich in den im Allgemeinen ringförmigen Strömungsweg erstreckt. Die Anordnung umfasst eine Turbinenmittelrahmenschaufel, die bei dem stromabwärtigen Kanalbereich positioniert ist, wobei eine vordere Kante der Turbinenmittelrahmenschaufel bei der Wölbung im stromabwärtigen Kanalbereich positioniert ist.

Die EP 2 660 424 B1 offenbart einen Turbinenverbindungskanal eines Gasturbinenmotors, wobei sich der Turbinenverbindungskanal von einem ersten Auslass einer ersten Turbine zu einem zweiten Einlass einer zweiten Turbine erstreckt und so ausgelegt ist, dass er einen von der ersten Turbine kommenden Luftstrom zu der zweiten Turbine leitet, wobei der Turbinenverbindungskanal eine erste Station mit einer ersten meridionalen Fläche und eine zweite Station mit einer zweiten meridionalen Fläche aufweist, wobei die erste Station stromaufwärts von der zweiten Station gelegen ist. Eine axiale Position, an der das Verhältnis der meridionalen Fläche von einem konvergenten Verlauf in einen divergenten Verlauf übergeht, beträgt zwischen 15% und 80% der axialen Länge. Die zweite meridionale Fläche ist kleiner als die erste meridionale Fläche.

Es ist eine Aufgabe der Erfindung, einen Verlauf eines Strömungskanals eines Verdichtungssystems zu optimieren.

Die Aufgabe wird erfmdungsgemäß durch ein Verdichtungssystem für eine Gasturbine gemäß den Merkmalen des Anspruchs 1, einen Hochdruckverdichter für ein Verdichtungssystem für eine Gasturbine gemäß den Merkmalen des Anspruchs 5, ein Verdichtungssystem für eine Gasturbine, umfassend einen Hochdruckverdichter gemäß den Merkmalen des Anspruchs 7 einen Niederdruckverdichter für ein Verdichtungssystem für eine Gasturbine gemäß den Merkmalen des Anspruchs 8, ein Verdichtungssystem für eine Gasturbine, umfassend einen Niederdruckverdichter gemäß den Merkmalen des Anspruchs 10, sowie eine Gasturbine, umfassend zumindest ein Verdichtungssystem gemäß den Merkmalen des Anspruchs 11 gelöst. Vorteilhafte Ausgestaltungen mit zweckmäßigen Weiterbildungen der Erfindung sind in den jeweiligen Unteransprüchen angegeben, wobei vorteilhafte Ausgestaltungen jedes Erfindungsaspekts als vorteilhafte Ausgestaltungen der jeweils anderen Erfindungsaspekte anzusehen sind.

Ein erster Aspekt der Erfindung betrifft ein Verdichtungssystem für eine Gasturbine, insbesondere für eine Fluggasturbine. Das Verdichtungssystem umfasst einen Strömungskanal, der sich von einer Eintrittsquerschnittsfläche eines Eintrittsleitgitters eines Niederdruckverdichters in einer Axialrichtung des Verdichtungssystems bis zu einer Austrittsquerschnittsfläche eines Austrittsleitgitters eines Hochdruckverdichters des Verdichtungssystems über eine Strömungskanallänge erstreckt. Mit anderen Worten umfasst das Verdichtungssystem den Strömungskanal, der zumindest durch den Niederdruckverdichter des Verdichtungssystems und zumindest den Hochdruckverdichter des Verdichtungssystems verläuft. Der Strömungskanal ist dazu vorgesehen, einen Hauptströmungspfad bereitzustellen, welcher angesogene Luft zum Verdichten entlang des Niederdruckverdichters und des Hochdruckverdichters führt. Die Strömungskanallänge beschreibt eine Ausdehnung des Strömungskanals entlang der Axialrichtung des Verdichtungssystems. Ein Anfang der Strömungskanallänge ist an der Eintrittsquerschnittsfläche des Einleitungsgitters des Niederdruckverdichters definiert. Ein Ende der Strömungskanallänge ist an der Austrittsquerschnittsfläche des Austrittsleitgitters des Hochdruckverdichters vorgegeben.

Der Strömungskanal ist durch eine Kanalinnenwand des Verdichtungssystems radial nach innen begrenzt und durch eine Kanalaußenwand des Verdichtungssystems radial nach außen begrenzt. Mit anderen Worten weist das Verdichtungssystem die Kanalinnenwand auf, welche eine radial nach innen gerichtete Begrenzung des Strömungskanals ist. Das Verdichtungssystem weist die Kanalaußenwand auf, durch welche der Strömungskanal nach außen begrenzt ist. Die Kanalinnenwand und die Kanalaußenwand können koaxial zueinander ausgerichtet sein, wobei die Kanalinnenwand einen kleineren Radius aufweisen kann als die Kanalaußenwand. Es ist vorgesehen, dass der Strömungskanal entlang der Strömungskanallänge senkrecht zu der Axialrichtung ausgerichtete Querschnittsflächen umfasst, die jeweilige vorbestimmte Größen aufweisen. Mit anderen Worten weisen die senkrecht zu der Axialrichtung des Verdichtungssystems ausgerichteten Querschnittsflächen die jeweiligen vorbestimmten Größen auf.

Dabei ist es vorgesehen, dass die Eintrittsquerschnittsfläche eine Größe aufweist, die ein 15,3-16,1 - faches einer Größe der Austrittsquerschnittsfläche beträgt. Mit anderen Worten ergibt sich die Größe der Eintrittsquerschnittsfläche durch eine Multiplikation der Austrittsquerschnittsfläche mit einem Wert der mindestens 15,3 und höchstens 16,1 beträgt. Der Wert kann somit insbesondere 15,3, 15,4, 15,5, 15,6, 15,7, 15,8, 15,9, 16,0, oder 16,1 betragen.

Zusätzlich oder alternativ dazu ist es vorgesehen, dass eine in einem Abstand von 40 % der Strömungskanallänge zu der Eintrittsquerschnittsfläche angeordnete Querschnittsfläche eine Größe aufweist, die ein 5,0-5,2 -faches der Größe der Austrittsquerschnittsfläche beträgt. Mit anderen Worten ist es vorgesehen, dass die Querschnittsfläche, welche sich in einem Abstand von 40 % der Strömungskanallänge zu der Eintrittsquerschnittsfläche befindet, eine Größe aufweist, die sich durch eine Multiplikation der Größe der Austrittsquerschnittsfläche mit einem Faktor ergibt, der mindestens 5,0 und höchstens 5,2 beträgt. Der Faktor kann somit insbesondere 5,0, 5,1 oder 5,2 betragen.

Zusätzlich oder alternativ dazu ist es vorgesehen, dass eine in einem Abstand von 60 % der Strömungskanallänge zu der Eintrittsquerschnittsfläche angeordnete Querschnittsfläche eine Größe aufweist die ein 2,0-2,2 -faches der Größe der Austrittsquerschnittsfläche beträgt. Mit anderen Worten ist es vorgesehen, dass die Querschnittsfläche, welche sich in einem Abstand von 60 % der Strömungskanallänge zu der Eintrittsquerschnittsfläche befindet, eine Größe aufweist, die sich durch eine Multiplikation der Größe der Austrittsquerschnittsfläche mit einem Faktor ergibt, der mindestens 2,0 und höchstens 2,2 beträgt. Der Faktor kann insbesondere 2,0, 2,1 oder 2,2 betragen. Durch die Erfindung ergibt sich der Vorteil, dass ein Querschnittsflächenverlauf des Strömungskanals bereitgestellt ist, welcher einen besonders geringen Strömungswiderstand aufweist. Durch eine Optimierung des Gesamtsystems konnte der Flächenverlauf derart verändert werden, dass niedrigere Machzahlen und als Konsequenz ein deutlicher Wirkungsgradvorteil für das gesamte Verdichtungssystem, aber auch für den Hochdruckverdichterströmungskanal alleine erzielt werden kann.

Die Erfindung umfasst auch Weiterbildungen durch die sich weitere Vorteile ergeben.

Eine Weiterbildung der Erfindung sieht vor, dass eine in einem Abstand von 10 % der Strömungskanallänge zu der Eintrittsquerschnittsfläche angeordnete Querschnittsfläche eine Größe aufweist die ein 10,9-11,5 -faches der Größe der Austrittsquerschnittsfläche beträgt. Mit anderen Worten ist es vorgesehen, dass die Querschnittsfläche, welche sich in einem Abstand von 10 % der Strömungskanallänge zu der Eintrittsquerschnittsfläche befindet, eine Größe aufweist, die sich durch eine Multiplikation der Größe der Austrittsquerschnittsfläche mit einem Faktor ergibt, der mindestens 10,9 und höchstens 11,5 beträgt. Der Faktor kann insbesondere 110,9, 11,0, 11,1, 11,2, 11,3, 11,4 oder 11,5 betragen.

Zusätzlich oder alternativ dazu ist es vorgesehen, dass eine in einem Abstand von 30 % der Strömungskanallänge zu der Eintrittsquerschnittsfläche angeordnete Querschnittsfläche eine Größe aufweist die ein 5,2-5,5 -faches der Größe der Austrittsquerschnittsfläche beträgt. Mit anderen Worten ist es vorgesehen, dass die Querschnittsfläche, welche sich in einem Abstand von 30 % der Strömungskanallänge zu der Eintrittsquerschnittsfläche befindet, eine Größe aufweist, die sich durch eine Multiplikation der Größe der Austrittsquerschnittsfläche mit einem Faktor ergibt, der mindestens 5,2 und höchstens 5,5 beträgt. Der Faktor kann insbesondere 5,2, 5,3, 5,4 oder 5,5 betragen.

Zusätzlich oder alternativ dazu ist es vorgesehen, dass eine in einem Abstand von 50 % der Strömungskanallänge zu der Eintrittsquerschnittsfläche angeordnete Querschnittsfläche eine Größe aufweist die ein 3,0-3,4 -faches der Größe der Austrittsquerschnittsfläche beträgt. Mit anderen Worten ist es vorgesehen, dass die Querschnittsfläche, welche sich in einem Abstand von 50 % der Strömungskanallänge zu der Eintrittsquerschnittsfläche befindet, eine Größe aufweist, die sich durch eine Multiplikation der Größe der Austrittsquerschnittsfläche mit einem Faktor ergibt, der mindestens 3,0 und höchstens 3,4 beträgt. Der Faktor kann insbesondere 3,0, 3,1, 3,2, 3,3 oder 3,4 betragen.

Zusätzlich oder alternativ dazu ist es vorgesehen, dass eine in einem Abstand von 70 % der Strömungskanallänge zu der Eintrittsquerschnittsfläche angeordnete Querschnittsfläche eine Größe aufweist die ein 1,5 bis 1,6 -faches der Größe der Austrittsquerschnittsfläche beträgt. Mit anderen Worten ist es vorgesehen, dass die Querschnittsfläche, welche sich in einem Abstand von 70 % der Strömungskanallänge zu der Eintrittsquerschnittsfläche befindet, eine Größe aufweist, die sich durch eine Multiplikation der Größe der Austrittsquerschnittsfläche mit einem Faktor ergibt, der mindestens 1,5 und höchstens 1,6 beträgt. Der Faktor kann insbesondere 1,5 oder 1,6 betragen.

Eine Weiterbildung der Erfindung sieht vor, dass eine in einem Abstand von 35 % der Strömungskanallänge zu der Eintrittsquerschnittsfläche angeordnete Querschnittsfläche eine Größe aufweist, die ein 4,6 bis 4,8 -faches der Größe der Austrittsquerschnittsfläche beträgt. Mit anderen Worten ist es vorgesehen, dass die Querschnittsfläche, welche sich in einem Abstand von 35 % der Strömungskanallänge zu der Eintrittsquerschnittsfläche befindet, eine Größe aufweist, die sich durch eine Multiplikation der Größe der Austrittsquerschnittsfläche mit einem Faktor ergibt, der mindestens 1,5 und höchstens 1,6 beträgt. Der Faktor kann insbesondere 1,5 oder 1,6 betragen.

Zusätzlich oder alternativ dazu ist es vorgesehen, dass eine in einem Abstand von 37,5 % der Strömungskanallänge zu der Eintrittsquerschnittsfläche angeordnete Querschnittsfläche eine Größe aufweist die ein 4,8-5,2 -faches der Größe der Austrittsquerschnittsfläche beträgt. Mit anderen Worten ist es vorgesehen, dass die Querschnittsfläche, welche sich in einem Abstand von 37,5 % der Strömungskanallänge zu der Eintrittsquerschnittsfläche befindet, eine Größe aufweist, die sich durch eine Multiplikation der Größe der Austrittsquerschnittsfläche mit einem Faktor ergibt, der mindestens 4,8 und höchstens 5,2 beträgt. Der Faktor kann insbesondere 4,8, 4,9, 5,0, 5,1 oder 5,2 betragen.

Zusätzlich oder alternativ dazu ist es vorgesehen, dass eine in einem Abstand von 42,5 % der Strömungskanallänge zu der Eintrittsquerschnittsfläche angeordnete Querschnittsfläche eine Größe aufweist die ein 4,6-4,8 -faches der Größe der Austrittsquerschnittsfläche beträgt. Mit anderen Worten ist es vorgesehen, dass die Querschnittsfläche, welche sich in einem Abstand von 42,5 % der Strömungskanallänge zu der Eintrittsquerschnittsfläche befindet, eine Größe aufweist, die sich durch eine Multiplikation der Größe der Austrittsquerschnittsfläche mit einem Faktor ergibt, der mindestens 4,6 und höchstens 4,8 beträgt. Der Faktor kann insbesondere 4,6, 4,7 oder 4,8 betragen.

Zusätzlich oder alternativ dazu ist es vorgesehen, dass eine in einem Abstand von 45 % der Strömungskanallänge zu der Eintrittsquerschnittsfläche angeordnete Querschnittsfläche eine Größe aufweist die ein 4,0-4,2 -faches der Größe der Austrittsquerschnittsfläche beträgt. Mit an-deren Worten ist es vorgesehen, dass die Querschnittsfläche, welche sich in einem Abstand von 45 % der Strömungskanallänge zu der Eintrittsquerschnittsfläche befindet, eine Größe auf-weist, die sich durch eine Multiplikation der Größe der Austrittsquerschnittsfläche mit einem Faktor ergibt, der mindestens 4,0 und höchstens 4,2 beträgt. Der Faktor kann insbesondere 4,0, 4,1 oder 4,2 betragen.

Eine Weiterbildung der Erfindung sieht vor, dass eine in einem Abstand von 80 % der Strömungskanallänge zu der Eintrittsquerschnittsfläche angeordnete Querschnittsfläche eine Größe aufweist, die ein 1,2-1,3 -faches der Größe der Austrittsquerschnittsfläche beträgt. Mit anderen Worten ist es vorgesehen, dass die Querschnittsfläche, welche sich in einem Abstand von 80 % der Strömungskanallänge zu der Eintrittsquerschnittsfläche befindet, eine Größe aufweist, die sich durch eine Multiplikation der Größe der Austrittsquerschnittsfläche mit einem Faktor ergibt, der mindestens 1,2 und höchstens 1,3 beträgt. Der Faktor kann insbesondere 1,2 oder 1,3 betragen.

Ein zweiter Aspekt der Erfindung betrifft einen Hochdruckverdichter für ein Verdichtungssystem einer Gasturbine, insbesondere für eine Fluggasturbine. Es ist vorgesehen dass der Hochdruckverdichter einen Hochdruckverdichterströmungskanal umfasst, der sich von einer Eintrittsquerschnittsfläche eines Eintrittsleitgitters des Hochdruckverdichters über eine in einer Axialrichtung des Hochdruckverdichters bis zu einer Austrittsquerschnittsfläche eines Austrittsleitgitters des Hochdruckverdichters verlaufende Hochdruckverdichterströmungskanallänge erstreckt, wobei der Hochdruckverdichterströmungskanal durch eine Kanalinnenwand des Hochdruckverdichters radial nach innen begrenzt ist und durch eine Kanalaußenwand des Hochdruckverdichters radial nach außen begrenzt ist. Mit anderen Worten umfasst der Hochdruckverdichter den Hochdruckverdichterströmungskanal, der sich von der Eintrittsquerschnittsfläche des Eintrittsleitgitters des Hochdruckverdichters bis zu der Austrittsquerschnittsfläche des Austrittsleitgitters des Hochdruckverdichters erstreckt. Entlang der Axialrichtung des Hochdruckverdichters weist der Hochdruckverdichterströmungskanal die Hochdruckverdichterströmungskanallänge auf. Der Hochdruckverdichter weist eine Kanalinnenwand auf, die den Hochdruckverdichterströmungskanal radial nach innen begrenzt. Der Hochdruckverdichter weist eine Kanalaußenwand auf, welche den Hochdruckverdichterströmungskanal nach außen begrenzt. Mit anderen Worten ist der Hochdruckverdichterströmungskanal durch die Kanalwände radial begrenzt. Die Kanalinnenwand und die Kanalaußenwand können beispielsweise koaxial zueinander ausgerichtet sein, wobei die Kanalinnenwand einen geringeren Radius aufweisen kann als die Kanalaußenwand.

Es ist vorgesehen, dass der Hochdruckverdichterströmungskanal entlang der Hochdruckverdichterströmungskanallänge senkrecht zu der Axialrichtung ausgerichtete Querschnittsflächen umfasst, die jeweilige vorbestimmte Größen aufweisen. Mit anderen Worten weist der Hochdruckverdichterströmungskanal senkrecht zur Axialrichtung ausgerichtete Querschnittsflächen auf, die jeweils vorgegebene Größen aufweisen. Dabei ist es vorgesehen, dass die Eintrittsquerschnittsfläche des Hochdruckverdichters eine Größe aufweist, die ein 4,8-5,6 -faches einer Größe der Austrittsquerschnittsfläche des Hochdruckverdichters beträgt. Der Faktor kann insbesondere 4,8, 4,9, 5,0, 5,1, 5,2, 5,3, 5,4, 5,5 oder 5,6 betragen.

Zusätzlich oder alternativ dazu ist es vorgesehen, dass eine in einem Abstand von 22 % der Hochdruckverdichterströmungskanallänge zu der Eintrittsquerschnittsfläche angeordnete Querschnittsfläche eine Größe aufweist die ein 2,8-3,3 -faches der Größe der Austrittsquerschnittsfläche beträgt. Mit anderen Worten ist es vorgesehen, dass die Querschnittsfläche, welche sich in einem Abstand von 22 % der Hochdruckverdichterströmungskanallänge zu der Eintrittsquerschnittsfläche des Hochdruckverdichters befindet, eine Größe aufweist, die sich durch eine Multiplikation der Größe der Austrittsquerschnittsfläche des Hochdruckverdichters mit einem Faktor ergibt, der mindestens 2,8 und höchstens 3,3 beträgt. Der Faktor kann insbesondere 2,8, 2,9, 3,0, 3,1, 3,2 oder 3,3 betragen.

Zusätzlich oder alternativ dazu ist es vorgesehen, dass eine in einem Abstand von 39 % der Hochdruckverdichterströmungskanallänge zu der Eintrittsquerschnittsfläche des Hochdruckverdichters angeordnete Querschnittsfläche eine Größe aufweist die ein 1,9-2,1 -faches der Größe der Austrittsquerschnittsfläche des Hochdruckverdichters beträgt. Mit anderen Worten ist es vorgesehen, dass die Querschnittsfläche, welche sich in einem Abstand von 39 % der Hochdruckverdichterströmungskanallänge zu der Eintrittsquerschnittsfläche des Hochdruckverdichters befindet, eine Größe aufweist, die sich durch eine Multiplikation der Größe der Austrittsquerschnittsfläche mit einem Faktor ergibt, der mindestens 1,9 und höchstens 2,1 beträgt. Der Faktor kann insbesondere 1,9, 2,0 oder 2,1 betragen.

Zusätzlich oder alternativ dazu ist es vorgesehen, dass eine in einem Abstand von 61 % der Hochdruckverdichterströmungskanallänge zu der Eintrittsquerschnittsfläche des Hochdruckverdichters angeordnete Querschnittsfläche eine Größe aufweist die ein 1,4-1,5 -faches der Größe der Austrittsquerschnittsfläche beträgt. Mit anderen Worten ist es vorgesehen, dass die Querschnittsfläche, welche sich in einem Abstand von 61 % der Hochdruckverdichterströmungskanallänge zu der Eintrittsquerschnittsfläche des Hochdruckverdichters befindet, eine Größe aufweist, die sich durch eine Multiplikation der Größe der Austrittsquerschnittsfläche mit einem Faktor ergibt, der mindestens 1,4 und höchstens 1,5 beträgt. Der Faktor kann insbesondere 1,4 oder 1,5 betragen.

Zusätzlich oder alternativ dazu ist es vorgesehen, dass eine in einem Abstand von 83 % der Hochdruckverdichterströmungskanallänge zu der Eintrittsquerschnittsfläche des Hochdruckverdichters angeordnete Querschnittsfläche eine Größe aufweist die ein 1,1 -faches der Größe der Austrittsquerschnittsfläche beträgt. Mit anderen Worten ist es vorgesehen, dass die Querschnittsfläche, welche sich in einem Abstand von 83 % der Hochdruckverdichterströmungskanallänge zu der Eintrittsquerschnittsfläche des Hochdruckverdichters befindet, eine Größe aufweist, die sich durch eine Multiplikation der Größe der Austrittsquerschnittsfläche mit einem Faktor ergibt, der 1,1 beträgt. Eine Weiterbildung der Erfindung sieht vor, dass der Hochdruckverdichterströmungskanal eine in einem Abstand von 11 % der Hochdruckverdichterströmungskanallänge zu der Eintrittsquerschnittsfläche des Hochdruckverdichters angeordnete Querschnittsfläche eine Größe aufweist die ein 3,8-4,4 -faches der Größe der Austrittsquerschnittsfläche beträgt. Mit an-deren Worten ist es vorgesehen, dass die Querschnittsfläche, welche sich in einem Abstand von 11 % der Hochdruckverdichterströmungskanallänge zu der Eintrittsquerschnittsfläche befindet, eine Größe aufweist, die sich durch eine Multiplikation der Größe der Austrittsquerschnittsfläche mit einem Faktor ergibt, der mindestens 3,8 und höchstens 4,4 beträgt. Der Faktor kann insbesondere 3,8, 3,9, 4,0, 4,1, 4,2, 4,3 oder 4,4 betragen.

Zusätzlich oder alternativ dazu ist es vorgesehen, dass eine in einem Abstand von 33 % der Hochdruckverdichterströmungskanallänge zu der Eintrittsquerschnittsfläche des Hochdruckverdichters angeordnete Querschnittsfläche eine Größe aufweist die ein 2,1-2,8 -faches der Größe der Austrittsquerschnittsfläche beträgt. Mit an-deren Worten ist es vorgesehen, dass die Querschnittsfläche, welche sich in einem Abstand von 33 % der Hochdruckverdichterströmungskanallänge zu der Eintrittsquerschnittsfläche befindet, eine Größe aufweist, die sich durch eine Multiplikation der Größe der Austrittsquerschnittsfläche mit einem Faktor ergibt, der mindestens 2,1 und höchstens 2,4 beträgt. Der Faktor kann insbesondere 2,1, 2,2, 2,3 oder 2,4 betragen.

Zusätzlich oder alternativ dazu ist es vorgesehen, dass eine in einem Abstand von 50 % der Hochdruckverdichterströmungskanallänge zu der Eintrittsquerschnittsfläche des Hochdruckverdichters angeordnete Querschnittsfläche eine Größe aufweist die ein 1,6-1,7 -faches der Größe der Austrittsquerschnittsfläche beträgt. Mit an-deren Worten ist es vorgesehen, dass die Querschnittsfläche, welche sich in einem Abstand von 50 % der Hochdruckverdichterströmungskanallänge zu der Eintrittsquerschnittsfläche befindet, eine Größe aufweist, die sich durch eine Multiplikation der Größe der Austrittsquerschnittsfläche mit einem Faktor ergibt, der mindestens 1,6 und höchstens 1,7 beträgt. Der Faktor kann insbesondere 1,6 oder 1,7 betragen.

Zusätzlich oder alternativ dazu ist es vorgesehen, dass eine in einem Abstand von 72 % der Hochdruckverdichterströmungskanallänge zu der Eintrittsquerschnittsfläche des Hochdruckverdichters angeordnete Querschnittsfläche eine Größe aufweist die ein 1,2-1,3 -faches der Größe der Austrittsquerschnittsfläche beträgt. Mit an-deren Worten ist es vorgesehen, dass die Querschnittsfläche, welche sich in einem Abstand von 72 % der Hochdruckverdichterströmungskanallänge zu der Eintrittsquerschnittsfläche befindet, eine Größe aufweist, die sich durch eine Multiplikation der Größe der Austrittsquerschnittsfläche mit einem Faktor ergibt, der mindestens 1,2 und höchstens 1,3 beträgt. Der Faktor kann insbesondere 1,2 oder 1,3 betragen.

Zusätzlich oder alternativ dazu ist es vorgesehen, dass eine in einem Abstand von 89 % der Hochdruckverdichterströmungskanallänge zu der Eintrittsquerschnittsfläche des Hochdruckverdichters angeordnete Querschnittsfläche eine Größe aufweist die ein 1,1 -faches der Größe der Austrittsquerschnittsfläche beträgt. Mit anderen Worten ist es vorgesehen, dass die Querschnittsfläche, welche sich in einem Abstand von 89 % der Hochdruckverdichterströmungskanallänge zu der Eintrittsquerschnittsfläche des Hochdruckverdichters befindet, eine Größe aufweist, die sich durch eine Multiplikation der Größe der Austrittsquerschnittsfläche mit einem Faktor ergibt, der 1,1 beträgt.

Ein dritter Aspekt der Erfindung betrifft ein Verdichtungssystem für eine Gasturbine, insbesondere für eine Fluggasturbine, die zumindest einen Hochdruckverdichteter umfasst.

Ein vierter Aspekt der Erfindung betrifft einen Niederdruckverdichter eines Verdichtungssystems einer Gasturbine, insbesondere für eine Fluggasturbine. Es ist vorgesehen dass der Niederdruckverdichter einen Niederdruckverdichterströmungskanal umfasst, der sich von einer Eintrittsquerschnittsfläche eines Eintrittsleitgitters des Niederdruckverdichters über eine in einer Axialrichtung des Niederdruckverdichters bis zu einer Austrittsquerschnittsfläche eines Austrittsleitgitters des Niederdruckverdichters verlaufende Niederdruckverdichterströmungskanallänge erstreckt, wobei der Niederdruckverdichterströmungskanal durch eine Kanalinnenwand des Niederdruckverdichters radial nach innen begrenzt ist und durch eine Kanalaußenwand des Niederdruckverdichters radial nach außen begrenzt ist. Mit anderen Worten umfasst der Niederdruckverdichter den Niederdruckverdichterströmungskanal, der sich von der Eintrittsquerschnittsfläche des Eintrittsleitgitters des Niederdruckverdichters bis zu der Austrittsquerschnittsfläche des Austrittsleitgitters des Niederdruckverdichters erstreckt. Entlang der Axialrichtung des Niederdruckverdichters weist der Niederdruckverdichterströmungskanal die Niederdruckverdichterströmungskanallänge auf.

Das Verdichtungssystem umfasst einen Strömungskanal, der sich von der Eintrittsquerschnittsfläche eines Eintrittsleitgitters eines Niederdruckverdichters in einer Axialrichtung des Verdichtungssystems bis zu einer Austrittsquerschnittsfläche eines Austrittsleitgitters eines Hochdruckverdichters des Verdichtungssystems über eine Strömungskanallänge erstreckt. Mit anderen Worten umfasst das Verdichtungssystem den Strömungskanal, der zumindest durch den Niederdruckverdichter des Verdichtungssystems und zumindest den Hochdruckverdichter des Verdichtungssystems verläuft. Der Strömungskanal ist dazu vorgesehen, einen Hauptströmungspfad bereitzustellen, welcher angesogene Luft zum Verdichten entlang des Niederdruckverdichters und des Hochdruckverdichters führt.

Der Niederdruckverdichter weist eine Kanalinnenwand auf, die den Niederdruckverdichterströmungskanal radial nach innen begrenzt. Der Niederdruckverdichter weist eine Kanalaußenwand auf, welche den Niederdruckverdichterströmungskanal nach außen begrenzt. Mit anderen Worten ist der Niederdruckverdichterströmungskanal durch die Kanalwände radial begrenzt. Die Kanalinnenwand und die Kanalaußenwand können beispielsweise koaxial zueinander ausgerichtet sein, wobei die Kanalinnenwand einen geringeren Radius aufweisen kann als die Kanalaußenwand.

Es ist vorgesehen, dass der Niederdruckverdichterströmungskanal entlang der Niederdruckverdichterströmungskanallänge senkrecht zu der Axialrichtung ausgerichtete Querschnittsflächen umfasst, die jeweilige vorbestimmte Größen aufweisen. Mit anderen Worten weist der Niederdruckverdichterströmungskanal senkrecht zur Axialrichtung ausgerichtete Querschnittsflächen auf, die jeweils vorgegebene Größen aufweisen. Dabei ist es vorgesehen, dass die Eintrittsquerschnittsfläche des Niederdruckverdichters eine Größe aufweist, die ein 15,4-16,1 -faches einer Größe der Austrittsquerschnittsfläche des Hochdruckverdichters beträgt. Der Faktor kann insbesondere 15,4, 15,5, 15,6, 15,7, 15,8, 15,9, 16,0, oder 16,1 betragen.

Zusätzlich oder alternativ dazu ist es vorgesehen, dass eine in einem Abstand von 20 % der Niederdruckverdichterströmungskanallänge zu der Eintrittsquerschnittsfläche angeordnete Querschnittsfläche eine Größe aufweist die ein 13,3-13,8 -faches der Größe der Austrittsquerschnittsfläche des Hochdruckverdichters beträgt. Mit anderen Worten ist es vorgesehen, dass die Querschnittsfläche, welche sich in einem Abstand von 20 % der Niederdruckverdichterströmungskanallänge zu der Eintrittsquerschnittsfläche des Niederdruckverdichters befindet, eine Größe aufweist, die sich durch eine Multiplikation der Größe der Austrittsquerschnittsfläche des Hochdruckverdichters mit einem Faktor ergibt, der mindestens 13,3 und höchstens 13,8 beträgt. Der Faktor kann insbesondere 13,3, 13,4, 13,5, 13,6, 13,7 oder 13,8 betragen.

Zusätzlich oder alternativ dazu ist es vorgesehen, dass eine in einem Abstand von 40 % der Niederdruckverdichterströmungskanallänge zu der Eintrittsquerschnittsfläche des Niederdruckverdichters angeordnete Querschnittsfläche eine Größe aufweist die ein 9,4-9,7 -faches der Größe der Austrittsquerschnittsfläche des Hochdruckverdichters beträgt. Mit anderen Worten ist es vorgesehen, dass die Querschnittsfläche, welche sich in einem Abstand von 40 % der Niederdruckverdichterströmungskanallänge zu der Eintrittsquerschnittsfläche des Niederdruckverdichters befindet, eine Größe aufweist, die sich durch eine Multiplikation der Größe der Austrittsquerschnittsfläche des Hochdruckverdichters mit einem Faktor ergibt, der mindestens 9,4 und höchstens 9,7 beträgt. Der Faktor kann insbesondere 9,4, 9,5, 9,6 oder 9,7 betragen.

Zusätzlich oder alternativ dazu ist es vorgesehen, dass eine in einem Abstand von 60 % der Niederdruckverdichterströmungskanallänge zu der Eintrittsquerschnittsfläche des Niederdruckverdichters angeordnete Querschnittsfläche eine Größe aufweist die ein 7,2-7,4 -faches der Größe der Austrittsquerschnittsfläche des Hochdruckverdichters beträgt. Mit anderen Worten ist es vorgesehen, dass die Querschnittsfläche, welche sich in einem Abstand von 60 % der Niederdruckverdichterströmungskanallänge zu der Eintrittsquerschnittsfläche des Niederdruckverdichters befindet, eine Größe aufweist, die sich durch eine Multiplikation der Größe der Austrittsquerschnittsfläche des Hochdruckverdichters mit einem Faktor ergibt, der mindestens 7,2 und höchstens 7,4 beträgt. Der Faktor kann insbesondere 7,2 7,3 oder 7,4 betragen.

Zusätzlich oder alternativ dazu ist es vorgesehen, dass eine in einem Abstand von 80 % der Niederdruckverdichterströmungskanallänge zu der Eintrittsquerschnittsfläche des Niederdruckverdichters angeordnete Querschnittsfläche eine Größe aufweist die ein 5,9 -faches der Größe der Austrittsquerschnittsfläche des Hochdruckverdichters beträgt. Mit anderen Worten ist es vorgesehen, dass die Querschnittsfläche, welche sich in einem Abstand von 80 % der Niederdruckverdichterströmungskanallänge zu der Eintrittsquerschnittsfläche des Niederdruckverdichters befindet, eine Größe aufweist, die sich durch eine Multiplikation der Größe der Austrittsquerschnittsfläche des Hochdruckverdichters mit einem Faktor ergibt, der 5,9 beträgt.

Zusätzlich oder alternativ dazu ist es vorgesehen, dass die Austrittsquerschnittsfläche des Niederdruckverdichters eine Größe aufweist, die ein 5,1 -faches einer Größe der Austrittsquerschnittsfläche des Hochdruckverdichters beträgt.

Eine Weiterbildung der Erfindung sieht vor, dass eine in einem Abstand von 10 % der Niederdruckverdichterströmungskanallänge zu der Eintrittsquerschnittsfläche angeordnete Querschnittsfläche eine Größe aufweist die ein 15,3-15,9 -faches der Größe der Austrittsquerschnittsfläche des Hochdruckverdichters beträgt. Mit anderen Worten ist es vorgesehen, dass die Querschnittsfläche, welche sich in einem Abstand von 10 % der Niederdruckverdichterströmungskanallänge zu der Eintrittsquerschnittsfläche des Niederdruckverdichters befindet, eine Größe aufweist, die sich durch eine Multiplikation der Größe der Austrittsquerschnittsfläche des Hochdruckverdichters mit einem Faktor ergibt, der mindestens 15,3 und höchstens 15,9 beträgt. Der Faktor kann insbesondere 15,3, 15,4, 15,5, 15,6, 15,7, 15,8 oder 15,9 betragen.

Zusätzlich oder alternativ dazu ist es vorgesehen, dass eine in einem Abstand von 30 % der Niederdruckverdichterströmungskanallänge zu der Eintrittsquerschnittsfläche des Niederdruckverdichters angeordnete Querschnittsfläche eine Größe aufweist die ein 11,2-11,5 -faches der Größe der Austrittsquerschnittsfläche des Hochdruckverdichters beträgt. Mit anderen Worten ist es vorgesehen, dass die Querschnittsfläche, welche sich in einem Abstand von 30 % der Niederdruckverdichterströmungskanallänge zu der Eintrittsquerschnittsfläche des Niederdruckverdichters befindet, eine Größe aufweist, die sich durch eine Multiplikation der Größe der Austrittsquerschnittsfläche des Hochdruckverdichters mit einem Faktor ergibt, der mindestens 11,2 und höchstens 11,5 beträgt. Der Faktor kann insbesondere 11,2 11,3, 11,4 oder 11,5 betragen.

Zusätzlich oder alternativ dazu ist es vorgesehen, dass eine in einem Abstand von 50 % der Niederdruckverdichterströmungskanallänge zu der Eintrittsquerschnittsfläche des Niederdruckverdichters angeordnete Querschnittsfläche eine Größe aufweist die ein 8,2-8,4 -faches der Größe der Austrittsquerschnittsfläche des Hochdruckverdichters beträgt. Mit anderen Worten ist es vorgesehen, dass die Querschnittsfläche, welche sich in einem Abstand von 50 % der Niederdruckverdichterströmungskanallänge zu der Eintrittsquerschnittsfläche des Niederdruckverdichters befindet, eine Größe aufweist, die sich durch eine Multiplikation der Größe der Austrittsquerschnittsfläche des Hochdruckverdichters mit einem Faktor ergibt, der mindestens 8,2 und höchstens 8,4 beträgt. Der Faktor kann insbesondere 8,2 8,3 oder 8,4 betragen.

Zusätzlich oder alternativ dazu ist es vorgesehen, dass eine in einem Abstand von 70 % der Niederdruckverdichterströmungskanallänge zu der Eintrittsquerschnittsfläche des Niederdruckverdichters angeordnete Querschnittsfläche eine Größe aufweist die ein 6,5-6,6 -faches der Größe der Austrittsquerschnittsfläche des Hochdruckverdichters beträgt. Mit anderen Worten ist es vorgesehen, dass die Querschnittsfläche, welche sich in einem Abstand von 70 % der Niederdruckverdichterströmungskanallänge zu der Eintrittsquerschnittsfläche des Niederdruckverdichters befindet, eine Größe aufweist, die sich durch eine Multiplikation der Größe der Austrittsquerschnittsfläche des Hochdruckverdichters mit einem Faktor ergibt, der mindestens 6,5 und höchstens 6,6 beträgt. Der Faktor kann insbesondere 6,5 oder 6,6 betragen.

Zusätzlich oder alternativ dazu ist es vorgesehen, dass eine in einem Abstand von 90 % der Niederdruckverdichterströmungskanallänge zu der Eintrittsquerschnittsfläche des Niederdruckverdichters angeordnete Querschnittsfläche eine Größe aufweist die ein 5,4 -faches der Größe der Austrittsquerschnittsfläche des Hochdruckverdichters beträgt. Mit anderen Worten ist es vorgesehen, dass die Querschnittsfläche, welche sich in einem Abstand von 90 % der Niederdruckverdichterströmungskanallänge zu der Eintrittsquerschnittsfläche des Niederdruckverdichters befindet, eine Größe aufweist, die sich durch eine Multiplikation der Größe der Austrittsquerschnittsfläche des Hochdruckverdichters mit einem Faktor ergibt, der 5,4 beträgt.

Weitere Merkmale und deren Vorteile sind den Beschreibungen des ersten Erfindungsaspekts und des zweiten Erfindungsaspekts zu entnehmen.

Ein fünfter Aspekt der Erfindung betrifft ein Verdichtungssystem für eine Gasturbine, insbesondere für eine Fluggasturbine, die zumindest einen Niederdruckverdichteter umfasst.

Weitere Merkmale und deren Vorteile sind den Beschreibungen des ersten Erfindungsaspekts, des zweiten Erfindungsaspekts und des dritten Erfindungsaspekts zu entnehmen.

Ein sechster Aspekt der Erfindung betrifft eine Gasturbine, die zumindest ein Verdichtungssystem umfasst.

Weitere Merkmale und deren Vorteile sind den Beschreibungen des ersten Erfindungsaspekts, des zweiten Erfindungsaspekts, des dritten Erfindungsaspekts und des vierten Erfindungsaspekts zu entnehmen.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen. Dabei zeigt:
**FIG. 1** eine schematische Darstellung eines Verdichtungssystems für eine Gasturbine; und
**FIG. 2** eine schematische Darstellung eines Hochdruckverdichters eines Verdichtungssystems für eine Gasturbine.

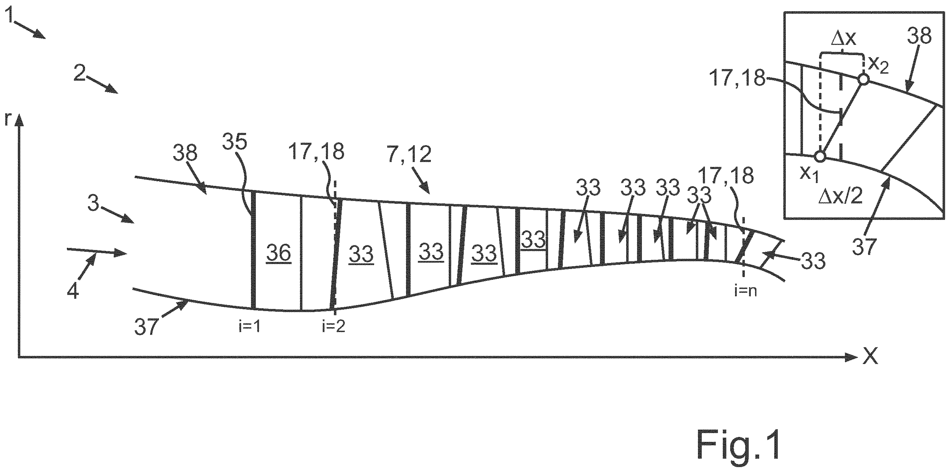

**FIG. 1** zeigt eine schematische Darstellung zur Erläuterung der Querschnittsfläche. Die relative Gittereintrittsposition x ist in Bezug auf einen Index des Gittereintritts definiert. Die Gittereintrittsposition x ist definiert durch x= ( i - 1 ) / (n - 1). Der Wert n kann der Index des letzten Gitters des jeweiligen Verdichters sein. Der Wert n kann in dem Niederdruckverdichter 11 und in dem Hochdruckverdichter 19 betragen. Die Querschnittsfläche kann eine Fläche beschreiben, die senkrecht zu der x-Achse an einer mittleren axialen Gittereintrittebenenposition Δx/2 angeordnet ist. Diese befindet sich am arithmetischen Mittel in einem Bereich Δx zwischen einer vorderen Gittereintrittebenenposition x1 und einer hinteren Gittereintrittebenenposition x2.

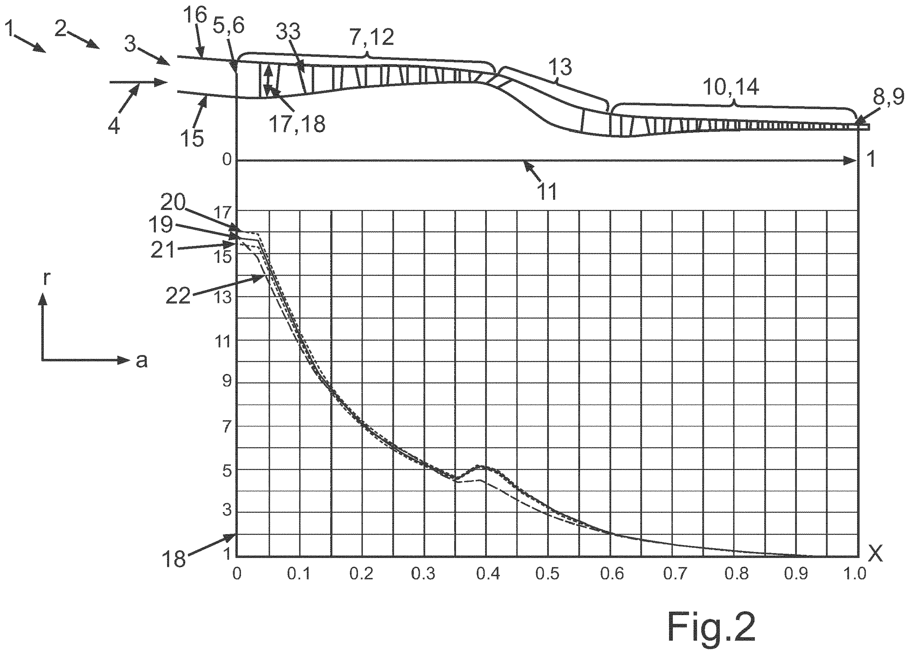

**FIG. 2** zeigt eine schematische Darstellung eines Verdichtungssystems für eine Gasturbine. Die Gasturbine 1 für welche das Verdichtungssystem 2 vorgesehen sein kann, kann insbesondere eine Fluggasturbine für ein Flugzeug sein. Das Verdichtungssystem 2 kann einen Strömungskanal 3 umfassen. Der Strömungskanal 3 kann dazu vorgesehen sein, Luft entlang eines durch den Strömungskanal 3 vorgegebenen Strömungspfads 4 durch das Verdichtungssystem 2 zu führen. Der Strömungskanal 3 kann sich von einer Eintrittsquerschnittsfläche 5 eines Eintrittsleitgitters 6 eines Niederdruckverdichters 7 des Verdichtungssystem 2 bis zu einer Austrittsquerschnittsfläche 8 eines Austrittsleitgitters 9 eines Hochdruckverdichters 10 des Verdichtungssystems 2 erstrecken. Der Strömungskanal 3 kann eine Strömungskanallänge 11 aufweisen. Die Strömungskanallänge 11 kann eine Länge des Strömungskanals 3 entlang einer Axialrichtung a des Verdichtungssystems 2 beschreiben. Die Axialrichtung a kann parallel zu einer Längsrichtung einer nicht gezeigten Welle oder einer Wellenanordnung des Verdichtungssystems 2 ausgerichtet sein.

Ein Anfang des Strömungskanals 3 kann die Eintrittsquerschnittsfläche 5 des Eintrittsleitgitters 6 des Niederdruckverdichters 7 sein. Ein Ende kann die Austrittsquerschnittsfläche 8 des Austrittsleitgitters 9 des Hochdruckverdichters 10 sein. Der Strömungskanal 2 kann drei Abschnitte umfassen, wobei ein erster Abschnitt des Strömungskanals 2 ein Niederdruckverdichterströmungskanal 12 des Niederdruckverdichters 7 sein kann, an dem sich ein Zwischenkanal 13 und ein Hochdruckverdichterströmungskanal 14 eines Hochdruckverdichters 10 anschließen können. Der Strömungskanal 3 kann durch eine Kanalinnenwand 15 des Verdichtungssystems 2 radial nach innen begrenzt sein und durch eine Kanalaußenwand 16 des Verdichtungssystems 2 radial nach außen begrenzt sein. Eine radiale Richtung r kann hierbei ebenfalls auf eine Welle oder eine Wellenanordnung bezogen sein. Wobei die radial innere Begrenzung eine Begrenzung des Strömungskanals 3 in eine Richtung beschreiben kann, die zu der Welle oder der Wellenanordnung des Verdichtungssystems 2 zugewandt ausgerichtet sein kann. Die radial äußere Begrenzung kann eine Begrenzung des Strömungskanals 3 in eine Richtung beschreiben, die von der Welle oder der Wellenanordnung des Verdichtungssystems 2 abgewandt ausgerichtet sein kann.

Durch den Strömungskanal 3 kann die durch den Niederdruckverdichter 7 angesogene Luft entlang des Strömungspfades 4 durch den Niederdruckverdichter 7 geleitet werden, wobei die Luft durch Laufräder des Niederdruckverdichters 7 mit kinetischer Energie beaufschlagt werden kann um die Dichte der Luft zu erhöhen. Die Luft kann somit bei einem Verlassen des Niederdruckverdichters 7 eine höhere Dichte aufweisen, als vor dem Einsaugen durch den Niederdruckverdichter 7.

Durch den Zwischenkanal 13 kann die Luft dem Hochdruckverdichter 10 zugeführt werden. Die Luft kann in dem Hochdruckverdichterströmungskanal 14 des Hochdruckverdichters 10 durch Laufschaufeln des Hochdruckverdichters 10 ebenfalls mit kinetischer Energie beaufschlagt werden um die Dichte der Luft weiter zu erhöhen. Die Luft kann an dem Austrittsleitgitter 9 des Hochdruckverdichters 10 des Verdichtungssystems 2 ausgegeben und beispielsweise einer Brennkammer der Gasturbine 1 zugeführt werden.

Um einen Luftwiderstand bei einem Führen der Luft durch den Strömungskanal 3 zu minimieren, kann es erforderlich sein, Querschnittsflächen 17 welche an jeweiligen Positionen entlang des Strömungskanals 3 der Strömungskanallänge 11 angeordnet sein können, so auszulegen, dass durch einen Größenverlauf 19 der Querschnittsflächen 17 ein minimaler Luftwiderstand wirkt. Größen 18 der jeweiligen Querschnittsflächen 17 können in Bezug auf eine Größe der Austrittsquerschnittsfläche 8 des Austrittsleitgitters 9 des Hochdruckverdichters 10 definiert sein. Mit anderen Worten können die Größen 18 der jeweiligen Querschnittsflächen 17 relativ definiert sein, wobei die Größen 18 der jeweiligen Querschnittsflächen 17 auf die Größe der Austrittsquerschnittsfläche 8 bezogen sein können. Es können zumindest einige der Größen 18 der jeweiligen Querschnittsflächen 17 an vorbestimmten Positionen entlang der Strömungskanallänge 11 definiert sein. Die Positionen der jeweiligen Querschnittsflächen 17 können ebenfalls relativ definiert sein und sich auf die Strömungskanallänge 11 beziehen. Die jeweiligen Positionen können durch Abstände der jeweiligen Querschnittsflächen 17 zu der Eintrittsquerschnittsfläche 5 des Eintrittsleitgitters 6 des Niederdruckverdichters 7 definiert sein, wobei der Abstand relativ in Bezug auf die Strömungskanallänge 11 vorgegeben sein kann. Insbesondere kann ein Abstand einer Länge von 0% der Strömungskanallänge 11 die Position der Eintrittsquerschnittsfläche 5 des Eintrittsleitgitters 6 des Niederdruckverdichters 7 beschreiben, ein Abstand einer Länge von 50% der Strömungskanallänge 11 eine Position in der Mitte des Strömungskanals 3, ein Abstand einer Länge von 100% der Strömungskanallänge 11 eine Position der Austrittsquerschnittsfläche 8 des Austrittsleitgitters 9 des Hochdruckverdichters 10.

Die jeweiligen Größen 18 können in einem vorbestimmten Wertebereich liegen, sodass der Größenverlauf 19 über die Strömungskanallänge 11 eine obere Grenze 20 und eine untere Grenze 21 aufweisen kann. Gezeigt ist zusätzlich ein Größenverlauf nach dem Stand der Technik 22. Im Vergleich zu dem Größenverlauf nach dem Stand der Technik 22 ist in einem Bereich, welcher sich in einem Abstand von ungefähr 0,35 - 0,5 der Strömungskanallänge 11 zu der Eintrittsquerschnittsfläche 5 befinden kann, eine lokale Erhöhung der Größen 18 zu erkennen. Es hat sich gezeigt, dass insbesondere diese Erhöhung vorteilhafte Auswirkungen auf den Luftwiderstand hat. In dem Strömungskanal 3 können weitere Leitgitter 33 angeordnet sein. Die Größen 18 der Querschnittsflächen 17 beziehen sich dabei auf den Strömungskanal 3 selbst und berücksichtigen somit nicht Reduzierungen der Größen 18 der Querschnittsflächen 17 durch Flächen der Schaufeln der Leitgitter 33. Größenverlauf nach dem Stand der Technik 22 hat einen flacheren Flächenverlauf, der zu höheren Machzahlen und damit zu einem niedrigeren Wirkungsgrad führt

Es kann beispielsweise vorgesehen sein, dass die Eintrittsquerschnittsfläche 5 eine Größe 18 aufweist, die ein 15,4 bis 16,1 -faches der Größe 18 der Austrittsquerschnittsfläche 8 beträgt, und/oder
- eine in einem Abstand von 10 % der Strömungskanallänge 11 zu der Eintrittsquerschnittsfläche 5 angeordnete Querschnittsfläche 17 eine Größe 18 aufweist, die ein 10,9 bis 11,5 -faches der Größe 18 der Austrittsquerschnittsfläche 8 beträgt, und/oder
- eine in einem Abstand von 30 % der Strömungskanallänge 11 zu der Eintrittsquerschnittsfläche 5 angeordnete Querschnittsfläche 17 eine Größe 18 aufweist, die ein 5,2 bis 5,5 -faches der Größe 18 der Austrittsquerschnittsfläche 8 beträgt, und/oder
- eine in einem Abstand von 35 % der Strömungskanallänge 11 zu der Eintrittsquerschnittsfläche 5 angeordnete Querschnittsfläche 17 eine Größe 18 aufweist, die ein 4,6 bis 4,8 -faches der Größe 18 der Austrittsquerschnittsfläche 8 beträgt, und/oder
- eine in einem Abstand von 37,5 % der Strömungskanallänge 11 zu der Eintrittsquerschnittsfläche 5 angeordnete Querschnittsfläche 17 eine Größe 18 aufweist, die ein 4,8 bis 5,2 -faches der Größe 18 der Austrittsquerschnittsfläche 8 beträgt, und/oder
- eine in einem Abstand von 40 % der Strömungskanallänge 11 zu der Eintrittsquerschnittsfläche 5 angeordnete Querschnittsfläche 17 eine Größe 18 aufweist, die ein 5,0 bis 5,2 -faches der Größe 18 der Austrittsquerschnittsfläche 8 beträgt, und/oder
- eine in einem Abstand von 42,5 % der Strömungskanallänge 11 zu der Eintrittsquerschnittsfläche 5 angeordnete Querschnittsfläche 17 eine Größe 18 aufweist, die ein 4,6 bis 4,8 -faches der Größe 18 der Austrittsquerschnittsfläche 8 beträgt, und/oder
- eine in einem Abstand von 45 % der Strömungskanallänge 11 zu der Eintrittsquerschnittsfläche 5 angeordnete Querschnittsfläche 17 eine Größe 18 aufweist, die ein 4,0 bis 4,2 -faches der Größe 18 der Austrittsquerschnittsfläche 8 beträgt, und/oder
- eine in einem Abstand von 50 % der Strömungskanallänge 11 zu der Eintrittsquerschnittsfläche 5 angeordnete Querschnittsfläche 17 eine Größe 18 aufweist, die ein 3,0 bis 3,4 -faches der Größe 18 der Austrittsquerschnittsfläche 8 beträgt, und/oder
- eine in einem Abstand von 60 % der Strömungskanallänge 11 zu der Eintrittsquerschnittsfläche 5 angeordnete Querschnittsfläche 17 eine Größe 18 aufweist, die ein 2,0 bis 2,2 -faches der Größe 18 der Austrittsquerschnittsfläche 8 beträgt, und/oder
- eine in einem Abstand von 70 % der Strömungskanallänge 11 zu der Eintrittsquerschnittsfläche 5 angeordnete Querschnittsfläche 17 eine Größe 18 aufweist, die ein 1,5 bis 1,6 -faches der Größe 18 der Austrittsquerschnittsfläche 8 beträgt, und/oder
- eine in einem Abstand von 80 % der Strömungskanallänge 11 zu der Eintrittsquerschnittsfläche 5 angeordnete Querschnittsfläche 17 eine Größe 18 aufweist, die ein 1,2 bis 1,3 -faches der Größe 18 der Austrittsquerschnittsfläche 8 beträgt.

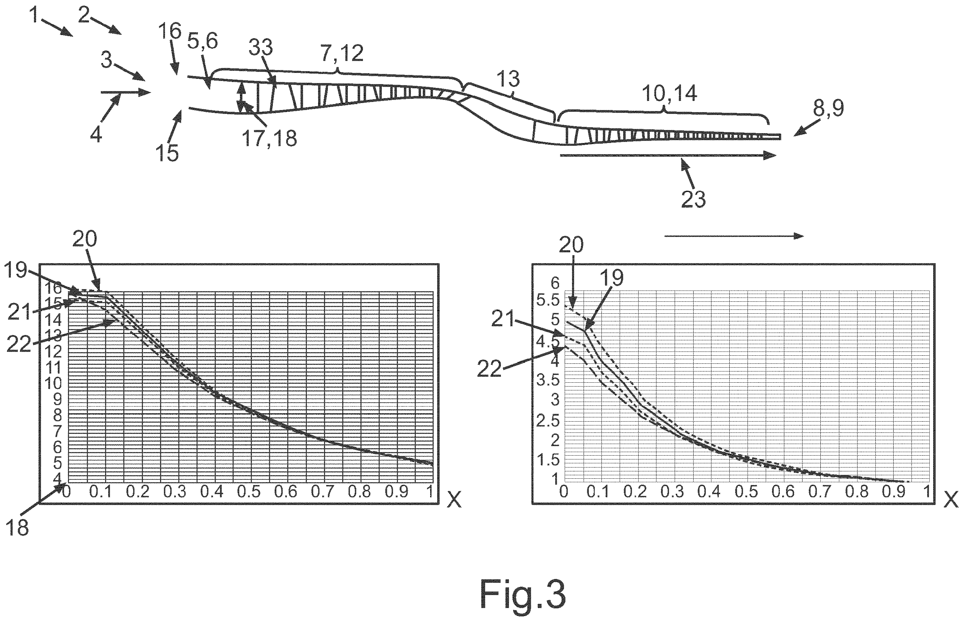

FIG. 3 zeigt eine weitere schematische Darstellung eines Verdichtungssystems für eine Gasturbine. Gezeigt werden die Verläufe der Größen 18 der Querschnittsflächen 17 in den jeweiligen Verdichtern (7, 10).

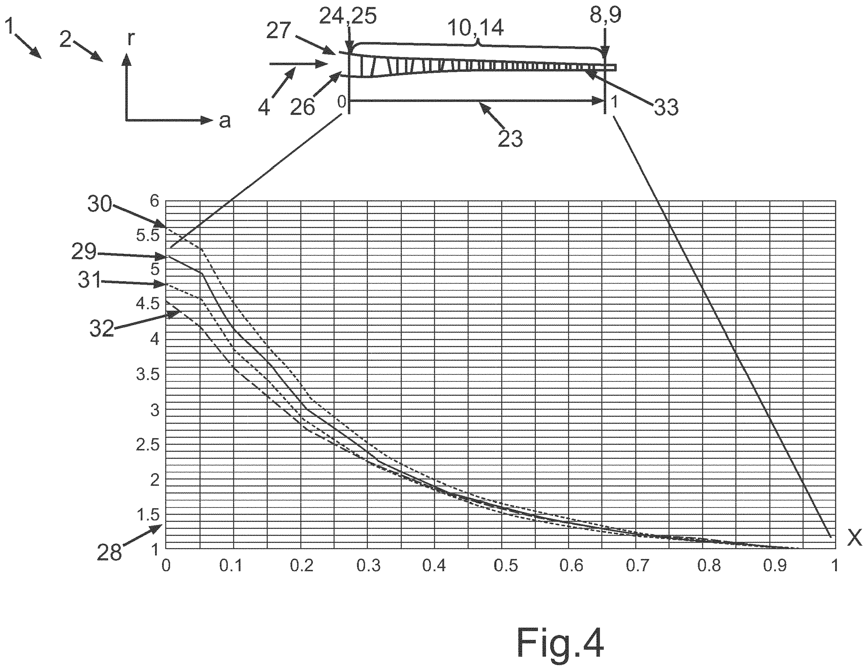

**FIG. 4** zeigt eine schematische Darstellung eines Niederdruckverdichterströmungskanals eines Niederdruckverdichters eines Verdichtungssystems für eine Gasturbine. Der Niederdruckverdichterströmungskanal 12 kann sich von einer Eintrittsquerschnittsfläche 35 eines Eintrittsleitgitters 6 des Niederdruckverdichters 7 bis zu einer Austrittsquerschnittsfläche 43 eines Austrittsleitgitters 44 des Niederdruckverdichters 7 über eine Niederdruckverdichterströmungskanallänge 34 erstrecken. Der Niederdruckverdichterströmungskanal 12 kann durch eine Kanalinnenwand 37 des Niederdruckverdichters 7 radial nach innen begrenzt sein und durch eine Kanalaußenwand 38 des Niederdruckverdichters 7 radial nach außen begrenzt sein. Der Niederdruckverdichterströmungskanal 12 kann dazu vorgesehen sein, Luft entlang eines Strömungspfades 4 von dem Eintrittsleitgitter 6 des Niederdruckverdichters 7 zu dem Austrittsleitgitter 44 des Niederdruckverdichters 7 zu leiten. Entlang der Niederdruckverdichterströmungskanallänge 34 können die Querschnittsflächen 17 des Niederdruckverdichterströmungskanals 12 Größen 28 aufweisen welche relativ in Bezug auf eine Größe der Austrittsquerschnittsfläche 8 des Austrittsleitgitters 9 des Hochdruckverdichters 10 definiert sein können. Der Verlauf kann durch die in **TAB. 1** angeführten Werte beschrieben sein.

**TAB. 1: Mögliche Werte der Größen der jeweiligen Querschnittsflächen des Niederdruckverdichters.**

| | Niederdruckverdichter | | |
|---|---|---|---|
| Relative Gitterposition (x) | Untere Grenze des Größenverlaufs (41) | Größenverlauf (39) | Obere Grenze des Größenverlaufs (40) |
| 0% | 15.4 | 15.8 | 16.1 |
| 10% | 15.3 | 15.6 | 15.9 |
| 20% | 13.3 | 13.5 | 13.8 |
| 30% | 11.2 | 11.3 | 11.5 |
| 40% | 9.4 | 9.5 | 9.7 |
| 50% | 8.2 | 8.3 | 8.4 |
| 60% | 7.2 | 7.3 | 7.4 |
| 70% | 6.5 | 6.5 | 6.6 |
| 80% | 5.9 | 5.9 | 5.9 |
| 90% | 5.4 | 5.4 | 5.4 |
| 100% | 5.1 | 5.1 | 5.1 |

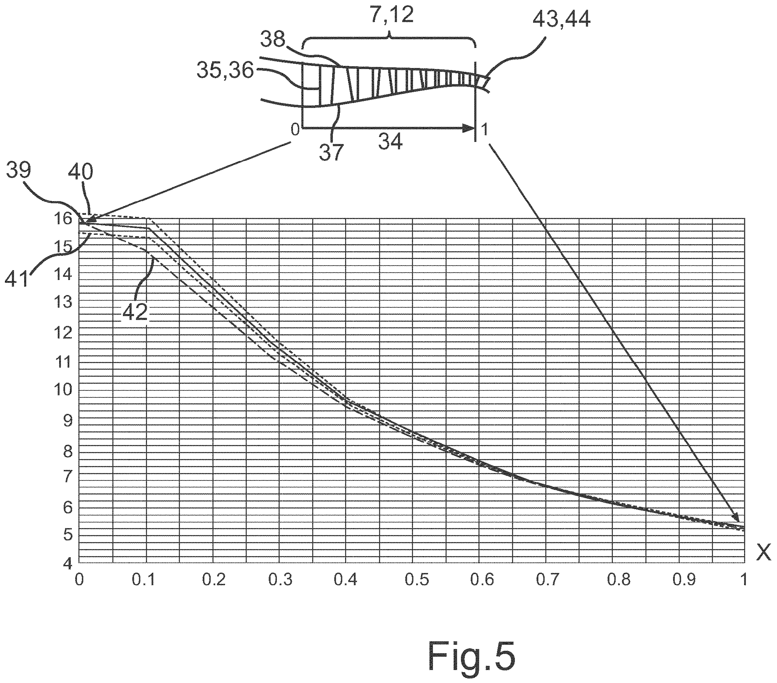

**FIG. 5** zeigt eine schematische Darstellung eines Hochdruckverdichterströmungskanals eines Hochdruckverdichters eines Verdichtungssystems für eine Gasturbine. Der Hochdruckverdichtekanal 14 kann sich von einer Eintrittsquerschnittsfläche 24 eines Eintrittsleitgitters 25 des Hochdruckverdichters 10 bis zu einer Austrittsquerschnittsfläche 8 eines Austrittsleitgitters 9 des Hochdruckverdichters 10 über eine Hochdruckverdichterströmungskanallänge 23 erstrecken. Der Hochdruckverdichterströmungskanal 14 kann durch eine Kanalinnenwand 26 des Hochdruckverdichters 10 radial nach innen begrenzt sein und durch eine Kanalaußenwand 27 des Hochdruckverdichters 10 radial nach außen begrenzt sein. Der Hochdruckverdichterströmungskanal 14 kann dazu vorgesehen sein, Luft entlang eines Strömungspfades 4 von dem Eintrittsleitgitter 25 des Hochdruckverdichters 10 zu dem Austrittsleitgitter 9 des Hochdruckverdichters 10 zu leiten. Entlang der Hochdruckverdichterströmungskanallänge 23 können die Querschnittsflächen 18 des Hochdruckverdichterströmungskanals 14 Größen 28 aufweisen welche relativ in Bezug auf eine Größe der Austrittsquerschnittsfläche 8 des Austrittsleitgitters 9 des Hochdruckverdichters 10 definiert sein können. Der Verlauf kann durch die in **TAB. 2** angeführten Werte beschrieben sein.

Um einen Luftwiderstand bei einem Führen der Luft durch den Hochdruckverdichterströmungskanal 14 zu minimieren, kann es erforderlich sein, Querschnittsflächen 17 ,welche an jeweiligen Positionen entlang des Hochdruckverdichterströmungskanal 14 der Hochdruckverdichterströmungskanallänge 23 angeordnet sein können, so auszulegen, dass durch einen Größenverlauf 29 ein minimaler Luftwiderstand wirkt. Die Größen 28 der jeweiligen Querschnittsflächen 17 können in Bezug auf die Größe der Austrittsquerschnittsfläche 8 des Austrittsleitgitters 9 des Hochdruckverdichters 10 definiert sein. Mit anderen Worten können die Größen 28 der jeweiligen Querschnittsflächen 17 relativ definiert sein, wobei die Größen 28 der jeweiligen Querschnittsflächen 17 auf die Größe der Austrittsquerschnittsfläche 8 des Hochdruckverdichters 10 definiert sein können. Es können zumindest einige der Größen 18 der jeweiligen Querschnittsflächen 17 an vorbestimmten Positionen entlang der Hochdruckverdichterströmungskanallänge 23 definiert sein. Die Positionen der jeweiligen Querschnittsflächen 17 können ebenfalls relativ definiert sein und sich auf die Hochdruckverdichterströmungskanallänge 23 beziehen. Die jeweiligen Positionen können durch Abstände der jeweiligen Querschnittsflächen 17 zu der Eintrittsquerschnittsfläche 24 des Eintrittsleitgitters 25 des Hochdruckverdichters 10 definiert sein, wobei der Abstand relativ in Bezug auf die Hochdruckverdichterströmungskanallänge 23 vorgegeben sein kann. Insbesondere kann ein Abstand einer Länge von 0% der Hochdruckverdichterströmungskanallänge 23 die Position der Eintrittsquerschnittsfläche 4 des Hochdruckverdichters 10 beschreiben, ein Abstand einer Länge von 50% der Hochdruckverdichterströmungskanallänge 23 eine Position in der Mitte des Hochdruckverdichterströmungskanals 14, ein Abstand einer Länge von 100% der Hochdruckverdichterströmungskanallänge 23 eine Position der Austrittsquerschnittsfläche 8 des Austrittsleitgitters 9 des Hochdruckverdichters 10 beschreiben. Die Größen 28 der Querschnittsflächen 17 beziehen sich dabei auf den Hochdruckverdichterströmungskanal 14 selbst und berücksichtigen somit nicht Reduzierungen der Größen 28 der Querschnittsflächen 17 durch Flächen der Schaufeln der Leitgitter 33.

Die jeweiligen Größen 28 können in einem Wertebereich liegen, sodass ein Größenverlauf 29 über die Hochdruckverdichterströmungskanallänge eine obere Grenze 30 und eine untere Grenze 31 aufweisen kann. Gezeigt ist zusätzlich ein Größenverlauf nach dem Stand der Technik 32. Es ist insbesondere zu erkennen dass in einem Abstandsbereich zwischen 0,3 der Hochdruckverdichterströmungskanallänge eine höhere Steigung bereitgestellt ist, als dies in dem Verlauf nach dem Stand der Technik der Fall ist.

**TAB. 2: Mögliche Werte der Größen der jeweiligen Querschnittsflächen des Hochdruckverdichters.**

| | Hochdruckverdichter | | |
|---|---|---|---|
| Relative Gitter-position (x) | Untere Grenze des Größenverlaufs (31) | Größenverlauf (29) | Obere Grenze des Größenverlaufs (30) |
| 0% | 4.8 | 5.2 | 5.6 |
| 6% | 4.5 | 4.9 | 5.2 |
| 11% | 3.8 | 4.1 | 4.4 |
| 17% | 3.3 | 3.6 | 3.8 |
| 22% | 2.8 | 3.0 | 3.2 |
| 28% | 2.5 | 2.6 | 2.8 |
| 33% | 2.1 | 2.3 | 2.4 |
| 39% | 1.9 | 2.0 | 2.1 |
| 44% | 1.7 | 1.8 | 1.9 |
| 50% | 1.6 | 1.7 | 1.7 |
| 56% | 1.5 | 1.5 | 1.6 |
| 61% | 1.4 | 1.4 | 1.5 |
| 67% | 1.3 | 1.3 | 1.4 |
| 72% | 1.2 | 1.2 | 1.3 |
| 78% | 1.2 | 1.2 | 1.2 |
| 83% | 1.1 | 1.1 | 1.1 |
| 89% | 1.1 | 1.1 | 1.1 |
| 94% | 1.0 | 1.0 | 1.0 |
| 100% | 1.0 | 1.0 | 1.0 |

Es kann vorgesehen sein, dass die Eintrittsquerschnittsfläche 24 des Hochdruckverdichters 10 eine Größe 28 aufweist, die ein 4,8 bis 5,6 -faches der Größe 28 der Austrittsquerschnittsfläche 8 beträgt, und/oder
- eine in einem Abstand von 11 % der Hochdruckverdichterströmungskanallänge 23 zu der Eintrittsquerschnittsfläche 24 des Hochdruckverdichters 10 angeordnete Querschnittsfläche 17 eine Größe 28 aufweist, die ein 3,8 bis 4,4 -faches der Größe 28 der Austrittsquerschnittsfläche 8 beträgt, und/oder
- eine in einem Abstand von 22 % der Hochdruckverdichterströmungskanallänge 23 zu der Eintrittsquerschnittsfläche 24 des Hochdruckverdichters 10 angeordnete Querschnittsfläche 17 eine Größe 28 aufweist, die ein 2,8 bis 3,3 -faches der Größe 28 der Austrittsquerschnittsfläche 8 beträgt, und/oder
- eine in einem Abstand von 33 % der Hochdruckverdichterströmungskanallänge 23 zu der Eintrittsquerschnittsfläche 24 des Hochdruckverdichters 10 angeordnete Querschnittsfläche 17 eine Größe 28 aufweist, die ein 2,1 bis 2,4 -faches der Größe 28 der Austrittsquerschnittsfläche 8 beträgt, und/oder
- eine in einem Abstand von 39 % der Hochdruckverdichterströmungskanallänge 23 zu der Eintrittsquerschnittsfläche 24 des Hochdruckverdichters 10 angeordnete Querschnittsfläche 17 eine Größe 28 aufweist, die ein 1,9 bis 2,1 -faches der Größe 28 der Austrittsquerschnittsfläche 8 beträgt, und/oder
- eine in einem Abstand von 50 % der Hochdruckverdichterströmungskanallänge 23 zu der Eintrittsquerschnittsfläche 24 des Hochdruckverdichters 10 angeordnete Querschnittsfläche 17 eine Größe 28 aufweist, die ein 1,6 bis 1,7 -faches der Größe 28 der Austrittsquerschnittsfläche 8 beträgt, und/oder
- eine in einem Abstand von 61 % der Hochdruckverdichterströmungskanallänge 23 zu der Eintrittsquerschnittsfläche 24 des Hochdruckverdichters 10 angeordnete Querschnittsfläche 17 eine Größe 28 aufweist, die ein 1,4 bis 1,5 -faches der Größe 28 der Austrittsquerschnittsfläche 8 beträgt, und/oder
- eine in einem Abstand von 72 % der Hochdruckverdichterströmungskanallänge 23 zu der Eintrittsquerschnittsfläche 24 des Hochdruckverdichters 10 angeordnete Querschnittsfläche 17 eine Größe 28 aufweist, die ein 1,2 bis 1,3 -faches der Größe 28 der Austrittsquerschnittsfläche 8 beträgt, und/oder
- eine in einem Abstand von 83 % der Hochdruckverdichterströmungskanallänge 23 zu der Eintrittsquerschnittsfläche 24 des Hochdruckverdichters 10 angeordnete Querschnittsfläche 17 eine Größe 28 aufweist, die ein 1,1 -faches der Größe 28 der Austrittsquerschnittsfläche 8 beträgt, und/oder
- eine in einem Abstand von 89 % der Hochdruckverdichterströmungskanallänge 23 zu der Eintrittsquerschnittsfläche 24 des Hochdruckverdichters 10 angeordnete Querschnittsfläche 17 eine Größe 28 aufweist, die ein 1,1 -faches der Größe 28 der Austrittsquerschnittsfläche 8 beträgt.

### Bezugszeichenliste:

- 1: Gasturbine
- 2: Verdichtungssystem
- 3: Strömungskanal
- 4: Strömungspfad
- 5: Eintrittsquerschnittsfläche des Verdichtungssystems
- 6: Eintrittsleitgitters des Verdichtungssystems
- 7: Niederdruckverdichter
- 8: Austrittsquerschnittsfläche des Hochdruckverdichters
- 9: Austrittsleitgitter des Hochdruckverdichters
- 10: Hochdruckverdichter
- 11: Strömungskanallänge
- 12: Niederdruckverdichterströmungskanal
- 13: Zwischenkanal
- 14: Hochdruckverdichterströmungskanal
- 15: Kanalinnenwand des Verdichtungssystem
- 16: Kanalaußenwand des Verdichtungssystem
- 17: Querschnittsflächen
- 18: Größen der Querschnittsflächen
- 19: Größenverlauf des Verdichtungssystems
- 20: Obere Grenze des Größenverlaufs des Verdichtungssystems
- 21: Untere Grenze des Größenverlaufs des Verdichtungssystems
- 22: Größenverlauf nach dem Stand der Technik
- 23: Hochdruckverdichterströmungskanallänge
- 24: Eintrittsquerschnittsfläche des Hochdruckverdichters
- 25: Eintrittsleitgitter des Hochdruckverdichters
- 26: Kanalinnenwand des Hochdruckverdichters
- 27: Kanalaußenwand des Hochdruckverdichters
- 28: Größen der Querschnittsflächen
- 29: Größenverlauf des Hochdruckverdichters
- 30: Obere Grenze des Größenverlaufs des Hochdruckverdichters
- 31: Untere Grenze des Größenverlaufs des Hochdruckverdichters
- 32: Größenverlauf nach dem Stand der Technik
- 33: Weitere Leitgitter
- 34: Niederdruckverdichterströmungskanallänge
- 35: Eintrittsquerschnittsfläche des Niederdruckverdichters
- 36: Eintrittsleitgitter des Niederdruckverdichters
- 37: Kanalinnenwand des Niederdruckverdichters
- 38: Kanalaußenwand des Niederdruckverdichters
- 39: Größenverlauf des Niederdruckverdichters
- 40: Obere Grenze des Größenverlaufs des Niederdruckverdichters
- 41: Untere Grenze des Größenverlaufs des Niederdruckverdichters
- 42: Größenverlauf nach dem Stand der Technik
- 43: Austrittsleitgitter des Niederdruckverdichters
- 44: Austrittsquerschnittsfläche des Niederdruckverdichters

- x: Relative Gittereintrittsposition
- x1: Vordere Gittereintrittebenenposition
- x2: Hintere Gittereintrittebenenposition
- a: Axialrichtung
- r: Radialrichtung
- i: Index eines Leitgitters

## Patentansprüche

1. Verdichtungssystem (2) für eine Gasturbine (1), insbesondere für eine Fluggasturbine (1), wobei
- das Verdichtungssystem (2) einen Strömungskanal (3) umfasst, der sich von einer Eintrittsquerschnittsfläche (5) eines Eintrittsleitgitters (6) eines Niederdruckverdichters (7) des Verdichtungssystems (2) über eine in einer Axialrichtung (a) des Verdichtungssystems (2) bis zu einer Austrittsquerschnittsfläche (8) eines Austrittsleitgitters (9) eines Hochdruckverdichters (10) des Verdichtungssystems (2) verlaufenden Strömungskanallänge (11) erstreckt, wobei
- der Strömungskanal (3) durch eine Kanalinnenwand (15) des Verdichtungssystems (2) radial nach innen begrenzt ist und durch eine Kanalaußenwand (16) des Verdichtungssystems (2) radial nach außen begrenzt ist,
**dadurch gekennzeichnet, dass**
der Strömungskanal (3) entlang der Strömungskanallänge (11) senkrecht zu der Axialrichtung (a) ausgerichtete Querschnittsflächen (17) umfasst, die jeweilige vorbestimmte Größen (18) aufweisen, wobei
- die Eintrittsquerschnittsfläche (5) eine Größe (18) aufweist, die ein 15,3 bis 16,1 -faches einer Größe (18) der Austrittsquerschnittsfläche (8) beträgt, und/oder
- eine in einem Abstand von 40 % der Strömungskanallänge (11) zu der Eintrittsquerschnittsfläche (5) angeordnete Querschnittsfläche (17) eine Größe (18) aufweist, die ein 5,0 bis 5,2 -faches der Größe (18) der Austrittsquerschnittsfläche (8) beträgt, und/oder
- eine in einem Abstand von 60 % der Strömungskanallänge (11) zu der Eintrittsquerschnittsfläche (5) angeordnete Querschnittsfläche (17) eine Größe (18) aufweist, die ein 2,0 bis 2,2 -faches der Größe (18) der Austrittsquerschnittsfläche (8) beträgt.

2. Verdichtungssystem (2) nach Anspruch 1,
**dadurch gekennzeichnet, dass**
- eine in einem Abstand von 10 % der Strömungskanallänge (11) zu der Eintrittsquerschnittsfläche (5) angeordnete Querschnittsfläche (17) eine Größe (18) aufweist, die ein 10,9 bis 11,5 -faches der Größe (18) der Austrittsquerschnittsfläche (8) beträgt, und/oder
- eine in einem Abstand von 30 % der Strömungskanallänge (11) zu der Eintrittsquerschnittsfläche (5) angeordnete Querschnittsfläche (17) eine Größe (18) aufweist, die ein 5,2 bis 5,5 -faches der Größe (18) der Austrittsquerschnittsfläche (8) beträgt, und/oder
- eine in einem Abstand von 50 % der Strömungskanallänge (11) zu der Eintrittsquerschnittsfläche (5) angeordnete Querschnittsfläche (17) eine Größe (18) aufweist, die ein 3,0 bis 3,4 -faches der Größe (18) der Austrittsquerschnittsfläche (8) beträgt, und/oder
- eine in einem Abstand von 70 % der Strömungskanallänge (11) zu der Eintrittsquerschnittsfläche (5) angeordnete Querschnittsfläche (17) eine Größe (18) aufweist, die ein 1,5 bis 1,6 -faches der Größe (18) der Austrittsquerschnittsfläche (8) beträgt.

3. Verdichtungssystem (2) nach Anspruch 1 oder 2,
**dadurch gekennzeichnet, dass**
- eine in einem Abstand von 35 % der Strömungskanallänge (11) zu der Eintrittsquerschnittsfläche (5) angeordnete Querschnittsfläche (17) eine Größe (18) aufweist, die ein 4,6 bis 4,8 -faches der Größe (18) der Austrittsquerschnittsfläche (8) beträgt, und/oder
- eine in einem Abstand von 37,5 % der Strömungskanallänge (11) zu der Eintrittsquerschnittsfläche (5) angeordnete Querschnittsfläche (17) eine Größe (18) aufweist, die ein 4,8 bis 5,2 -faches der Größe (18) der Austrittsquerschnittsfläche (8) beträgt, und/oder
- eine in einem Abstand von 42,5 % der Strömungskanallänge (11) zu der Eintrittsquerschnittsfläche (5) angeordnete Querschnittsfläche (17) eine Größe (18) aufweist, die ein 4,6 bis 4,8 -faches der Größe (18) der Austrittsquerschnittsfläche (8) beträgt, und/oder
- eine in einem Abstand von 45 % der Strömungskanallänge (11) zu der Eintrittsquerschnittsfläche (5) angeordnete Querschnittsfläche (17) eine Größe (18) aufweist, die ein 4,0 bis 4,2 -faches der Größe (18) der Austrittsquerschnittsfläche (8) beträgt.

4. Verdichtungssystem (2) nach einem der vorhergehenden Ansprüche,
**dadurch gekennzeichnet, dass**
eine in einem Abstand von 80 % der Strömungskanallänge (11) zu der Eintrittsquerschnittsfläche (5) angeordnete Querschnittsfläche (17) eine Größe (18) aufweist, die ein 1,2 bis 1,3 -faches der Größe (18) der Austrittsquerschnittsfläche (8) beträgt.

5. Hochdruckverdichter (10) für ein Verdichtungssystem (2) für eine Gasturbine (1), insbesondere für eine Fluggasturbine (1), wobei
- der Hochdruckverdichter (10) einen Hochdruckverdichterströmungskanal (14) umfasst, der sich von einer Eintrittsquerschnittsfläche (24) eines Eintrittsleitgitters (25) des Hochdruckverdichters (10) über eine in einer Axialrichtung (a) des Hochdruckverdichters (10) bis zu einer Austrittsquerschnittsfläche (8) eines Austrittsleitgitters (9) des Hochdruckverdichters (10) verlaufende Hochdruckverdichterströmungskanallänge (23) erstreckt, wobei
- der Hochdruckverdichterströmungskanal (14) durch eine Kanalinnenwand (26) des Hochdruckverdichters (10) radial nach innen begrenzt ist und durch eine Kanalaußenwand (27) des Hochdruckverdichters (10) radial nach außen begrenzt ist,
**dadurch gekennzeichnet, dass**
der Hochdruckverdichterströmungskanal (14) entlang der Hochdruckverdichterströmungskanallänge (23) senkrecht zu der Axialrichtung (a) ausgerichtete Querschnittsflächen (17) umfasst, die jeweilige vorbestimmte Größen (28) aufweisen, wobei
- die Eintrittsquerschnittsfläche (24) des Eintrittsleitgitters (25) des Hochdruckverdichters (10) eine Größe (28) aufweist, die ein 4,8 bis 5,6 -faches einer Größe (28) der Austrittsquerschnittsfläche (8) beträgt, und/oder
- eine in einem Abstand von 22 % der Hochdruckverdichterströmungskanallänge (23) zu der Eintrittsquerschnittsfläche (24) des Hochdruckverdichters (10) angeordnete Querschnittsfläche (17) eine Größe (28) aufweist, die ein 2,8 bis 3,3 -faches der Größe (28) der Austrittsquerschnittsfläche (8) beträgt, und/oder
- eine in einem Abstand von 39 % der Hochdruckverdichterströmungskanallänge (23) zu der Eintrittsquerschnittsfläche (24) des Hochdruckverdichters (10) angeordnete Querschnittsfläche (17) eine Größe (28) aufweist, die ein 1,9 bis 2,1 -faches der Größe (28) der Austrittsquerschnittsfläche (8) beträgt, und/oder
- eine in einem Abstand von 61 % der Hochdruckverdichterströmungskanallänge (23) zu der Eintrittsquerschnittsfläche (24) des Hochdruckverdichters (10) angeordnete Querschnittsfläche (17) eine Größe (28) aufweist, die ein 1,4 bis 1,5 -faches der Größe (28) der Austrittsquerschnittsfläche (8) beträgt, und/oder
- eine in einem Abstand von 83 % der Hochdruckverdichterströmungskanallänge (23) zu der Eintrittsquerschnittsfläche (24) des Hochdruckverdichters (10) angeordnete Querschnittsfläche (17) eine Größe (28) aufweist, die ein 1,1 -faches der Größe (28) der Austrittsquerschnittsfläche (8) beträgt.

6. Hochdruckverdichter (10) nach Anspruch 5,
**dadurch gekennzeichnet, dass**
- eine in einem Abstand von 11 % der Hochdruckverdichterströmungskanallänge (23) zu der Eintrittsquerschnittsfläche (24) des Hochdruckverdichters (10) angeordnete Querschnittsfläche (17) eine Größe (28) aufweist, die ein 3,8 bis 4,4 -faches der Größe (28) der Austrittsquerschnittsfläche (8) beträgt, und/oder
- eine in einem Abstand von 33 % der Hochdruckverdichterströmungskanallänge (23) zu der Eintrittsquerschnittsfläche (24) des Hochdruckverdichters (10) angeordnete Querschnittsfläche (17) eine Größe (28) aufweist, die ein 2,1 bis 2,4 -faches der Größe (28) der Austrittsquerschnittsfläche (8) beträgt, und/oder
- eine in einem Abstand von 50 % der Hochdruckverdichterströmungskanallänge (23) zu der Eintrittsquerschnittsfläche (24) des Hochdruckverdichters (10) angeordnete Querschnittsfläche (17) eine Größe (28) aufweist, die ein 1,6 bis 1,7 -faches der Größe (28) der Austrittsquerschnittsfläche (8) beträgt, und/oder
- eine in einem Abstand von 72 % der Hochdruckverdichterströmungskanallänge (23) zu der Eintrittsquerschnittsfläche (24) des Hochdruckverdichters (10) angeordnete Querschnittsfläche (17) eine Größe (28) aufweist, die ein 1,2 bis 1,3 -faches der Größe (28) der Austrittsquerschnittsfläche (8) beträgt, und/oder
- eine in einem Abstand von 89 % der Hochdruckverdichterströmungskanallänge (23) zu der Eintrittsquerschnittsfläche (24) des Hochdruckverdichters (10) angeordnete Querschnittsfläche (17) eine Größe (28) aufweist, die ein 1,1 -faches der Größe (28) der Austrittsquerschnittsfläche (8) beträgt.

7. Verdichtungssystem (2) für eine Gasturbine (1), insbesondere für eine Gasturbine (1), umfassend zumindest einen Hochdruckverdichter (10) nach Anspruch 5 oder 6.

8. Niederdruckverdichter (7) eines Verdichtungssystems (2) für eine Gasturbine (1), insbesondere für eine Fluggasturbine (1), wobei
- der Niederdruckverdichter (7) einen Niederdruckverdichterströmungskanal (12) umfasst, der sich von einer Eintrittsquerschnittsfläche (35) eines Eintrittsleitgitters (36) des Niederdruckverdichters (7) über eine in einer Axialrichtung (a) des Niederdruckverdichters (7) bis zu einer Austrittsquerschnittsfläche (44) eines Austrittsleitgitters (43) des Niederdruckverdichters (7) verlaufende Niederdruckverdichterströmungskanallänge (34) erstreckt,
- das Verdichtungssystem (2) einen Strömungskanal (3) umfasst, der sich von der Eintrittsquerschnittsfläche (5) des Eintrittsleitgitters (6) des Niederdruckverdichters (7) des Verdichtungssystems (2) über eine in der Axialrichtung (a) des Verdichtungssystems (2) bis zu einer Austrittsquerschnittsfläche (8) eines Austrittsleitgitters (9) eines Hochdruckverdichters (10) des Verdichtungssystems (2) erstreckt, wobei
- der Niederdruckverdichterströmungskanal (12) durch eine Kanalinnenwand (37) des Niederdruckverdichters (7) radial nach innen begrenzt ist und durch eine Kanalaußenwand (38) des Niederdruckverdichters (7) radial nach außen begrenzt ist,
**dadurch gekennzeichnet, dass**
der Niederdruckverdichterströmungskanal (12) entlang der Niederdruckverdichterströmungskanallänge (34) senkrecht zu der Axialrichtung (a) ausgerichtete Querschnittsflächen (17) umfasst, die jeweilige vorbestimmte Größen (18) aufweisen, wobei
- die Eintrittsquerschnittsfläche (35) des Eintrittsleitgitters (36) des Niederdruckverdichters (7) eine Größe (18) aufweist, die ein 15,4 bis 16,1 -faches einer Größe (18) der Austrittsquerschnittsfläche (8) des Austrittsleitgitters (9) des Hochdruckverdichters (10) beträgt, und/oder
- eine in einem Abstand von 20 % der Niederdruckverdichterströmungskanallänge (34) zu der Eintrittsquerschnittsfläche (35) des Niederdruckverdichters (7) angeordnete Querschnittsfläche (17) eine Größe (18) aufweist, die ein 13,3 bis 13,8 -faches der Größe (18) der Austrittsquerschnittsfläche (8) des Austrittsleitgitters (9) des Hochdruckverdichters (10) beträgt, und/oder
- eine in einem Abstand von 40 % der Niederdruckverdichterströmungskanallänge (34) zu der Eintrittsquerschnittsfläche (35) des Niederdruckverdichters (7) angeordnete Querschnittsfläche (17) eine Größe (18) aufweist, die ein 9,4 bis 9,7 -faches der Größe (18) der Austrittsquerschnittsfläche (8) des Austrittsleitgitters (9) des Hochdruckverdichters (10) beträgt, und/oder
- eine in einem Abstand von 60 % der Niederdruckverdichterströmungskanallänge (34) zu der Eintrittsquerschnittsfläche (35) des Niederdruckverdichters (7) angeordnete Querschnittsfläche (17) eine Größe (18) aufweist, die ein 7,2 bis 7,4 -faches der Größe (18) der Austrittsquerschnittsfläche (8) des Austrittsleitgitters (9) des Hochdruckverdichters (10) beträgt, und/oder
- eine in einem Abstand von 80 % der Niederdruckverdichterströmungskanallänge (34) zu der Eintrittsquerschnittsfläche (35) des Niederdruckverdichters (7) angeordnete Querschnittsfläche (17) eine Größe (18) aufweist, die ein 5,9 -faches der Größe (18) der Austrittsquerschnittsfläche (8) des Austrittsleitgitters (9) des Hochdruckverdichters (10) beträgt,
- die Austrittsquerschnittsfläche (44) des Austrittsleitgitters (43) des Niederdruckverdichters (7) eine Größe (18) aufweist, die ein 5,1 -faches einer Größe (18) der Austrittsquerschnittsfläche (8) des Austrittsleitgitters (9) des Hochdruckverdichters (10) beträgt.

9. Niederdruckverdichter (7) nach Anspruch 8,
**dadurch gekennzeichnet, dass**
- eine in einem Abstand von 10 % der Niederdruckverdichterströmungskanallänge (34) zu der Eintrittsquerschnittsfläche (35) des Niederdruckverdichters (7) angeordnete Querschnittsfläche (17) eine Größe (18) aufweist, die ein 15,3 bis 15,9 -faches der Größe (18) der Austrittsquerschnittsfläche (8) des Austrittsleitgitters (9) des Hochdruckverdichters (10) beträgt, und/oder
- eine in einem Abstand von 30 % der Niederdruckverdichterströmungskanallänge (34) zu der Eintrittsquerschnittsfläche (35) des Niederdruckverdichters (7) angeordnete Querschnittsfläche (17) eine Größe (18) aufweist, die ein 11,2 bis 11,5 -faches der Größe (18) der Austrittsquerschnittsfläche (8) des Austrittsleitgitters (9) des Hochdruckverdichters (10) beträgt, und/oder
- eine in einem Abstand von 50 % der Niederdruckverdichterströmungskanallänge (34) zu der Eintrittsquerschnittsfläche (35) des Niederdruckverdichters (7) angeordnete Querschnittsfläche (17) eine Größe (18) aufweist, die ein 8,2 bis 8,4 -faches der Größe (18) der Austrittsquerschnittsfläche (8) des Austrittsleitgitters (9) des Hochdruckverdichters (10) beträgt, und/oder
- eine in einem Abstand von 70 % der Niederdruckverdichterströmungskanallänge (34) zu der Eintrittsquerschnittsfläche (35) des Niederdruckverdichters (7) angeordnete Querschnittsfläche (17) eine Größe (18) aufweist, die ein 6,5 bis 6,6 -faches der Größe (18) der Austrittsquerschnittsfläche (8) des Austrittsleitgitters (9) des Hochdruckverdichters (10) beträgt, und/oder
- eine in einem Abstand von 90 % der Niederdruckverdichterströmungskanallänge (34) zu der Eintrittsquerschnittsfläche (35) des Niederdruckverdichters (7) angeordnete Querschnittsfläche (17) eine Größe (18) aufweist, die ein 5,4 -faches der Größe (18) der Austrittsquerschnittsfläche (8) des Austrittsleitgitters (9) des Hochdruckverdichters (10) beträgt.

10. Verdichtungssystem (2) für eine Gasturbine (1), insbesondere für eine Gasturbine (1), umfassend zumindest einen Niederdruckverdichter (7) nach Anspruch 8 oder 9.

11. Gasturbine (1), umfassend zumindest ein Verdichtungssystem (2) nach einem der Ansprüche 1 bis 4 oder 7.
